# EUROPÄISCHE PATENTANMELDUNG

(11) **EP 2 977 132 A1**
(43) Veröffentlichungstag der Anmeldung: **27.01.2016**
(21) Anmeldenummer: 14177933.0
(22) Anmeldetag: 22.07.2014
(51) Int. Cl.: B23B 31/11, B23B 51/04, F16D 1/108, F16D 1/116

(54) **Werkzeugaufnahme zur Verbindung eines Diamantbohrgeräts mit einer Bohrkrone**

(71) Anmelder: HILTI Aktiengesellschaft, 9494 Schaan (LI)
(72) Erfinder: Reichenberger, Thomas, 86929 Untermühlhausen (DE); Ried, Xaver, 86925 Fuchstal-Asch (DE)
(74) Vertreter: Hilti Aktiengesellschaft Corporate Intellectual Property

(57) **Zusammenfassung**

Vorrichtung (20) zur Aufnahme und Sicherung eines Werkzeugs (2; Fig. 1), insbesondere einer Bohrkrone, an einer Werkzeugmaschine (1; Fig. 1), beispielsweise eine Kernbohrmaschine enthaltend eine Abtriebswelle (6) zur Übertragung eines in der Werkzeugmaschine (1) erzeugten Drehmoments auf das Werkzeug (2); und eine um die Abtriebswelle (6) positionierte Überwurfmutter (22) zur lösbaren Verbindung der Abtriebswelle (6) mit einem Anschlussende (9) des Werkzeugs (2).

Die Abtriebswelle (6) enthält einen Sicherungsring (25) und die Überwurfmutter (22) enthält eine Anschlagscheibe (26) sowie ein Dämpfungselement (27), wobei die Anschlagscheibe (26) zwischen dem Sicherungsring (25) und dem Dämpfungselement (27) positioniert ist.

## Beschreibung

Die vorliegende Erfindung bezieht sich auf eine Vorrichtung zur Aufnahme und Sicherung eines Werkzeugs, insbesondere einer Bohrkrone, an einer Werkzeugmaschine, beispielsweise eine Kernbohrmaschine, enthaltend eine Abtriebswelle zur Übertragung eines in der Werkzeugmaschine erzeugten Drehmoments auf das Werkzeug und eine um die Abtriebswelle positionierte Überwurfmutter zur lösbaren Verbindung der Abtriebswelle mit einem Anschlussende des Werkzeugs.

Zur Durchführung einer Kernbohrung bzw. Hohlkernbohrung werden im Wesentlichen eine Kernbohrmaschine sowie ein Bohrwerkzeug, sog. Bohrkrone, benötigt. Die Kernbohrmaschine enthält im Grunde einen Elektromotor als Antrieb und zur Erzeugung eines Drehmoments sowie eine Abtriebswelle zur Übertragung dieses Drehmoments. Die Bohrkrone besteht im Wesentlichen aus einen zylindrischen Hohlkörper (Stahlmantel) mit einer Diamantsegmentierung an einem Schneideende und einem Anschlussstück an einem Befestigungsende. Die Bohrkrone wird mit dem Anschlussstück so an die Abtriebswelle der Kernbohrmaschine befestigt, dass das in der Kernbohrmaschine erzeugte Drehmoment auf die Bohrkrone übertragen wird. Das auf die Bohrkrone übertragene Drehmoment versetzt diese in Rotation, wodurch das Schneideende mit der Diamantsegmentierung in einen Werkstoff gedreht und somit ein Loch in den Werkstoff gebohrt werden kann. Bei dem Werkstoff handelt es sich für gewöhnlich um ein mineralisches Gestein oder Beton.

Die Abtriebswelle der Kernbohrmaschinen verfügt für gewöhnlich über ein einfaches Gewinde, mit dem die Abtriebswelle bzw. die Kernbohrmaschine mit dem Anschlussstück der Bohrkrone verbunden wird. Eine derartige Gewindeverbindung wird beispielsweise als BS-Schnittstelle bezeichnet. Zur Montage sowie zur Demontage der Bohrkrone an bzw. von der Abtriebswelle der Kernbohrmaschine ist üblicherweise ein spezielles Werkzeug in Form eines (Schrauben-)Schlüssels notwendig. Sowohl das korrekte Verspannen des Gewindes als auch das erneute Lösen des Gewindes ist ohne dieses Spezialwerkzeug und lediglich per Hand äußerst schwierig oder sogar unmöglich. Aufgrund des oftmals extrem hohen Drehmoments, das von der Kernbohrmaschine auf die Bohrkrone übertragen wird, kann es zu einem sehr großen Kraftschluss in dem Gewinde zwischen der Abtriebswelle und Bohrkrone kommen.

Eine Werkzeugaufnahme für eine Bohrkrone zur Befestigung an einer Kernbohrmaschine ist in Form eines Gewindes gemäß dem Stand der Technik beispielsweise in der europäischen Patentanmeldung EP 1 424 152 A1 offenbart. Hierbei weist ein Einsteckende der Bohrkrone ein Außengewindeflansch und eine Getriebewelle der Kernbohrmaschine ein Innengewindeflansch auf. Der Außengewindeflansch und der Innengewindeflansch werden axial miteinander verspannt, um die Bohrkrone an der Getriebewelle zu befestigen.

Bei den auf dem Markt befindlichen Werkzeugaufnahmen gemäß dem Stand der Technik können bei einer extremen Beanspruchung unerwünschte Effekte auftreten. So kann sich z.B. die Verschraubung zwischen der Abtriebswelle und der Bohrkrone aufgrund von Vibrationen und Erschütterungen während der Kernbohrung lösen. Vibrationen und Erschütterungen während der Kernbohrung können jedoch auch zu einem noch höheren Kraftschluss in dem Gewinde zwischen der Abtriebswelle und der Bohrkrone führen, so dass nur noch mit einem sehr hohen Kraftaufwand das Gewinde wieder gelöst werden kann. Verschmutzungen durch anfallenden Bohrstaub oder Deformationen durch eine äußere Krafteinwirkung können Beschädigungen an einzelnen Komponenten der Werkzeugaufnahme verursachen, die wiederum zu einer fehlerhaften Funktion oder zu einem kompletten Versagen der Werkzeugaufnahme führen können.

Es ist daher Aufgabe der vorliegenden Erfindung die vorstehend beschriebenen Probleme zu lösen und insbesondere eine Vorrichtung zur Aufnahme und Sicherung eines Werkzeugs, insbesondere einer Bohrkrone, an einer Werkzeugmaschine, beispielsweise eine Kernbohrmaschine, bereitzustellen, mit der ein verbessertes Montieren und Demontieren einer Bohrkrone an einer Kernbohrmaschine sowie der sichere Halt der Bohrkrone an der Kernbohrmaschine während der eigentlichen Kernbohrung gewährleistet ist.

Diese Aufgabe wird erfindungsgemäss durch den Gegenstand des unabhängigen Anspruchs 1 gelöst. Weitere Ausführungsformen des erfindungsgemässen Gegenstands finden sich in den abhängigen Ansprüchen.

Hierzu wird eine Vorrichtung bereitgestellt zur Aufnahme und Sicherung eines Werkzeugs, insbesondere einer Bohrkrone, an einer Werkzeugmaschine, beispielsweise eine Kernbohrmaschine, enthaltend eine Abtriebswelle zur Übertragung eines in der Werkzeugmaschine erzeugten Drehmoments auf das Werkzeug und eine um die Abtriebswelle positionierte Überwurfmutter zur lösbaren Verbindung der Abtriebswelle mit einem Anschlussende des Werkzeugs.

Erfindungsgemäß ist dabei vorgesehen, dass die Abtriebswelle einen Sicherungsring enthält und die Überwurfmutter eine Anschlagscheibe sowie ein Dämpfungselement enthält, wobei die Anschlagscheibe zwischen dem Sicherungsring und dem Dämpfungselement positioniert ist.

Hierdurch kann ein verbessertes Montieren und Demontieren des Werkzeugs an der Werkzeugmaschine sowie der sichere Halt des Werkzeugs an der Werkzeugmaschine während der eigentlichen Kernbohrung ohne die Zuhilfenahme eines Werkzeuges gewährleistet werden.

Gemäß einer vorteilhaften Ausführungsform der vorliegenden Erfindung kann vorgesehen sein, dass in einem verbundenen Zustand der Überwurfmutter mit dem Aufnahmeende des Werkzeugs eine Innenfläche der Überwurfmutter gegen das Dämpfungselement drückt, wodurch die Anschlagscheibe kraftschlüssig gegen den Sicherungsring drückt. Die Innenfläche kann dabei im Wesentlichen senkrecht zur Außenfläche der Überwurfmutter positioniert sein, so dass diese Innenfläche parallel zu dem Dämpfungselement, zur Anschlagscheibe und zum Sicherungsring verläuft. Mit Hilfe des Dämpfungselements kann verhindert werden, dass sich die Überwurfmutter bei Vibrationen während des Betriebs der Werkzeugmaschine löst und somit die Abtriebswelle und das Werkzeug nicht mehr fest mit einander verbunden sind.

Entsprechend einer weiteren vorteilhaften Ausführungsform der vorliegenden Erfindung kann vorgesehen sein, dass Überwurfmutter ein Innengewinde enthält und das Aufnahmeende des Werkzeugs ein zu dem Innengewinde der Überwurfmutter korrespondierendes Außengewinde enthält, welches zur lösbaren Verbindung der Abtriebswelle mit dem Aufnahmeende des Werkzeugs dient. Hierdurch kann auf einfache Art und Weise die Abtriebswelle mit dem Aufnahmeende des Werkzeugs werkzeuglos wiederlösbar miteinander verbunden werden.

Entsprechend einer weiteren vorteilhaften Ausführungsform der vorliegenden Erfindung kann vorgesehen sein, dass die Überwurfmutter aus Kunststoff besteht. Hierdurch kann die Überwurfmutter leichter auf das Aufnahmeende des Werkzeugs geschraubt werden, und ebenso auch leichter wieder von dem Aufnahmeende des Werkzeugs geschraubt werden.

Gemäß einer weiteren vorteilhaften Ausführungsform der vorliegenden Erfindung kann vorgesehen sein, dass der Sicherungsring und die Anschlagscheibe aus Metall bestehen. Hierdurch kann eine möglichst hohe kraftschlüssige Verbindung zwischen dem Sicherungsring und der Anschlagscheibe erreicht werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Fig. 1: eine schematische Ansicht auf eine als Kernbohrmaschine ausgestaltete Werkzeugmaschine mit einer Abtriebswelle verbunden mit einem als Bohrkrone ausgestalteten Werkzeug und einer erfindungsgemäßen Vorrichtung zur Aufnahme und Sicherung eines Werkzeugs an einer Werkzeugmaschine;
- Fig. 2: eine schematische Ansicht auf ein Anschlussende der Bohrkrone und ein Verbindungsende der Abtriebswelle;
- Fig. 3: eine perspektivische Ansicht der erfindungsgemäßen Vorrichtung zur Aufnahme und Sicherung des Werkzeugs an der Werkzeugmaschine mit einer Überwurfmutter auf der Abtriebswelle der Kernbohrmaschine zusammen mit dem Anschlussende der Bohrkrone;
- Fig. 4: eine perspektivische Ansicht der erfindungsgemäßen Vorrichtung zur Aufnahme und Sicherung des Werkzeugs an der Werkzeugmaschine mit der Überwurfmutter;
- Fig. 5: eine perspektivische Ansicht der Abtriebswelle der Abtriebswelle mit einem Sicherungsring und einer Anschlagscheibe;

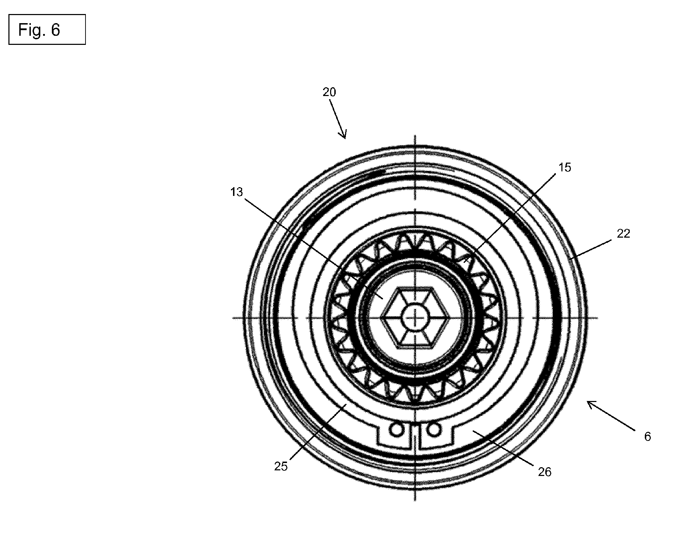

- Fig. 6: eine Vorderansicht auf die erfindungsgemäße Vorrichtung zur Aufnahme und Sicherung des Werkzeugs an der Werkzeugmaschine;

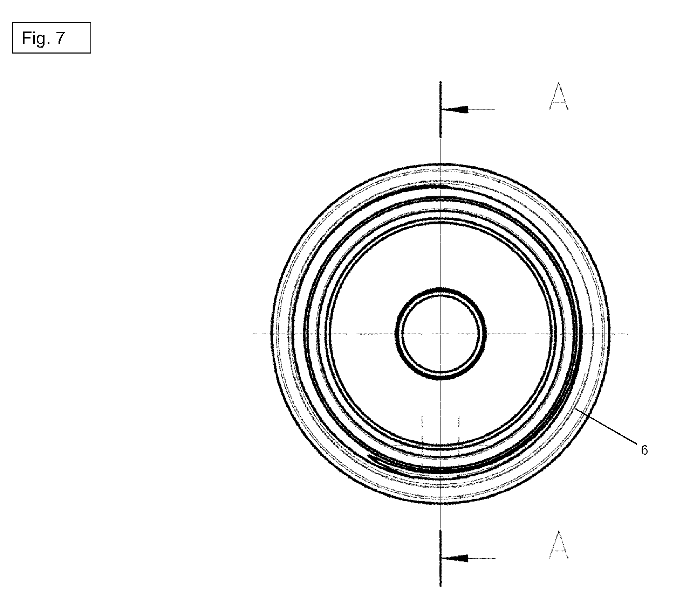

- Fig. 7: eine Rückansicht auf die erfindungsgemäße Vorrichtung zur Aufnahme und Sicherung des Werkzeugs an der Werkzeugmaschine;
- Fig. 8: eine Querschnittsansicht der erfindungsgemäßen Vorrichtung zur Aufnahme und Sicherung des Werkzeugs an der Werkzeugmaschine entlang der Schnittlinie A-A in Fig. 6; und
- Fig. 9: eine weitere Querschnittsansicht der erfindungsgemäßen Vorrichtung zur Aufnahme und Sicherung des Werkzeugs an der Werkzeugmaschine entlang der Schnittlinie A-A in Fig. 6.

### Ausführungsbeispiel:

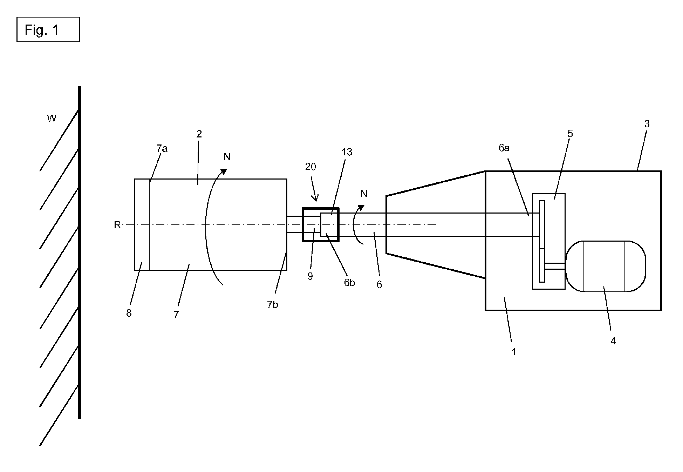

Fig. 1 zeigt eine perspektivische Ansicht auf eine Werkzeugmaschine 1, die mit einem Werkzeug 2 verbunden ist. Die Werkzeugmaschine 1 ist dabei als Kernbohrmaschine ausgestaltete. Das Werkzeug 2 ist in Form einer Bohrkrone ausgestaltet.

Die Kernbohrmaschine 1 enthält im Wesentlichen ein Gehäuse 3, einen Antrieb 4, ein Getriebe 5 und eine Abtriebswelle 6. Der Antrieb 4 ist durch einen Elektromotor verwirklicht. Der als Elektromotor ausgestaltete Antrieb 4 und das Getriebe 5 sind vollständig in dem Gehäuse 3 positioniert. Die Abtriebswelle 6 enthält ein erstes Ende 6a und ein zweites Ende 6b. Das erste Ende 6a ist mit dem Getriebe 5 verbunden. Das Getriebe 5 ist wiederum mit dem Elektromotor 4 verbunden. Das zweite Ende 6b der Abtriebswelle 6 ragt aus dem Gehäuse 3 heraus.

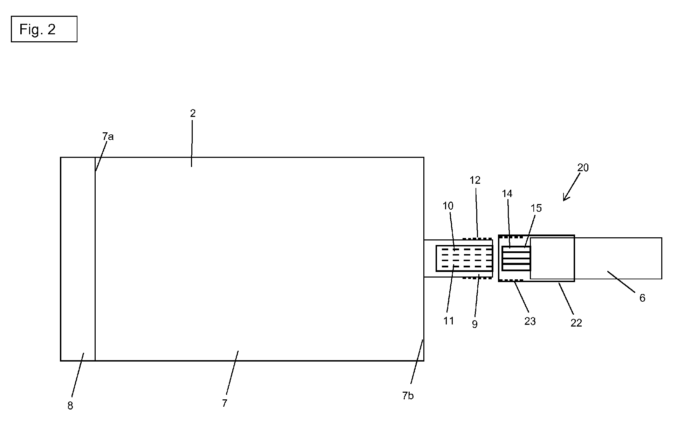

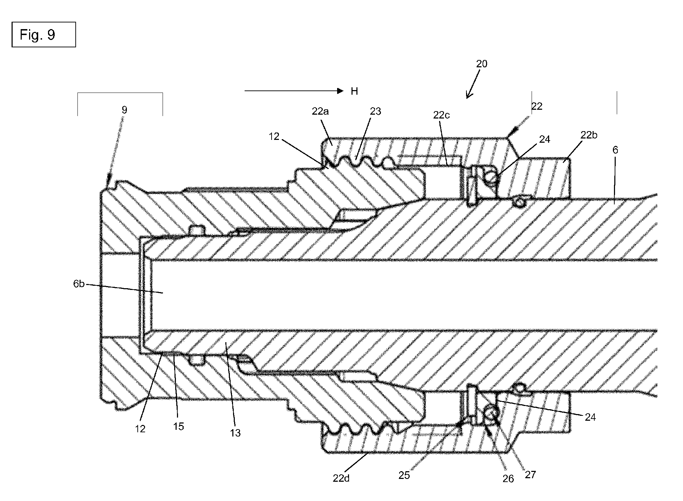

Die Bohrkrone 2 enthält einen zylindrischen Hohlkörper 7 mit einen ersten Ende 7a und einem zweiten Ende 7b. An dem ersten Ende 7a ist eine Diamantsegmentierung 8 als Schneideende positioniert. Mit Hilfe der Diamantsegmentierung 8 kann ein Loch in einen mineralischen Werkstoff W gebohrt werden. An dem zweiten Ende 7b ist ein Anschlussende 9 vorgesehen. Das Anschlussende 9 enthält ein Hohlzahnrad 10 mit Innenverzahnung 11 (vgl. Fig. 2 und 9) sowie Außengewinde 12 (vgl. Fig. 2, 4, 5, 8 und 9).

Mit Hilfe des Getriebes 5 wird ein in dem Elektromotor 4 erzeugtes Drehmoment auf die Abtriebswelle 6 übertragen, welche dadurch um die Rotationsachse R in die Drehrichtung N gedreht wird.

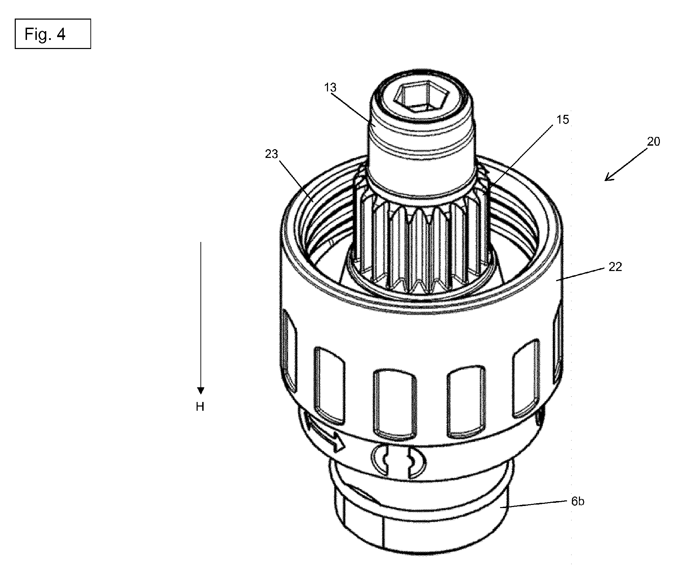

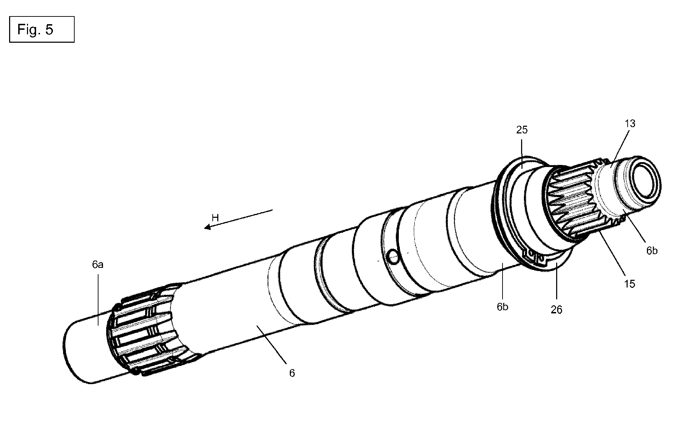

Wie insbesondere in Fig. 4 und 5 dargestellt, ist an dem zweiten Ende 6b der Abtriebswelle 6 ein Verbindungsende 13 vorgesehen, welches (wie nachfolgend im Detail beschrieben) dazu dient die Abtriebswelle 6 mit der Bohrkrone 2 zu verbinden und dadurch das Drehmoment der Abtriebswelle 6 auf die Bohrkrone 2 zu übertragen. Das Verbindungsende 13 der Abtriebswelle 6 enthält ein Zahnrad 14 mit Außenverzahnung 15, welches drehfest mit der Abtriebswelle 6 verbunden ist. Das Zahnrad 14 ist so ausgestaltet, dass es in das entsprechend ausgebildete Hohlzahnrad 10 des Anschlussendes 9 der Bohrkrone 2 eingepasst werden kann. Die Innenverzahnung 11 des Hohlzahnrads 10 des Anschlussendes 9 korrespondiert dabei entsprechend mit der Außenverzahnung 15 des Zahnrads 14 der Abtriebswelle 6. Gemäß einer nicht gezeigten Ausführungsform der vorliegenden Erfindung ist es auch möglich, dass das Verbindungsende 13 der Abtriebswelle 6 nicht ein Zahnrad und das Anschlussende 9 der Bohrkrone 2 nicht ein Hohlzahnrad 10 enthält. Anstelle dessen, kann an dem Verbindungsende 13 der Abtriebswelle 6 ein Abschnitt vorgesehen sein, der einem Vielkeil, einer Keilwelle, einem Polygon bzw. etwas ähnlichem entspricht. Gleichermaßen kann an dem Anschlussende 9 der Bohrkrone 2 ein Abschnitt vorgesehen sein, der zur Aufnahme des als Vielkeil, Keilwelle, Polygon bzw. etwas ähnlichem entsprechend ausgestalteten Abschnitts des Verbindungsendes 13 der Abtriebswelle 6. Der Abschnitt an dem Verbindungsende 13 der Abtriebswelle 6 passt damit in den Abschnitt des Anschlussendes 9 der Bohrkrone 2 und stellt damit eine formschlüssige Verbindungs- bzw. Drehmomentübertragungsmöglichkeit zwischen Abtriebswelle 6 sowie Bohrkrone 2 dar.

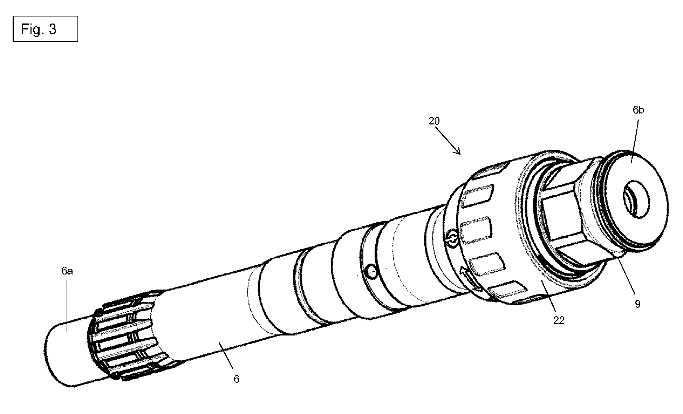

Wie insbesondere in Fig. 3 gezeigt, ist an dem zweiten Ende, d.h. an dem Verbindungsende 13 der Abtriebswelle 6 eine Vorrichtung 20 zur Aufnahme und Sicherung der Bohrkrone 2 an der Kernbohrmaschine 1 vorgesehen. Mittels dieser Vorrichtung 20 kann ein einfaches Montieren und Demontieren der Bohrkrone 2 an der Kernbohrmaschine 1 sowie der sichere Halt der Bohrkrone 2 an der Kernbohrmaschine 1 während der eigentlichen Kernbohrung gewährleistet werden. Die Vorrichtung 20 ist dabei so ausgestaltet, dass das Montieren und Demontieren der Bohrkrone 2 an der Kernbohrmaschine 1 ohne die Zuhilfenahme eines Werkzeuges und nur per Hand erfolgen kann.

Wie in den Fig. 3, 4, 5, 8 und 9 dargestellt, enthält die Vorrichtung 20 zur Aufnahme und Sicherung der Bohrkrone 2 an der Kernbohrmaschine 1 eine zylindrische Überwurfmutter 22, einen Sicherungsring 25, eine Anschlagscheibe 26 und ein Dämpfungselement 27.

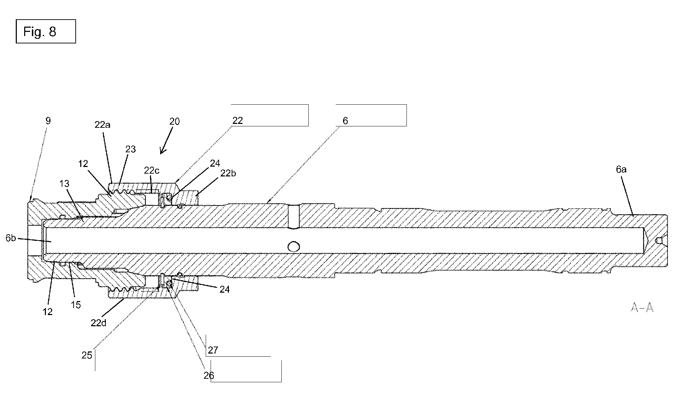

Die Überwurfmutter 22 enthält ein erstes Ende 22a, ein zweites Ende 22b, eine Innenseite 22c und eine Außenseite 22d. An dem ersten Ende 22a ist an der Innenseite 22c ein Innengewinde 23 positioniert. Das Innengewinde 23 der Überwurfmutter 22 korrespondiert mit dem entsprechenden Außengewinde 12 des Anschlussendes 9 der Bohrkrone 2. An dem zweiten Ende 22b der Überwurfmutter 22 ist eine Innenfläche 24 vorgesehen, die sich senkrecht zur Außenseite 22d der Überwurfmutter 22 erstreckt (vgl. Fig. 8 und 9).

Wie in Fig. 5 dargestellt, ist der Sicherungsring 25 auf der Abtriebswelle 6 fest positioniert. Der Sicherungsring 25 ist dabei in Pfeilrichtung H vor der Anschlagscheibe 26 platziert.

Wie in Fig. 8 und 9 gezeigt, ist das Dämpfungselement 27 in Pfeilrichtung H hinter der Anschlagscheibe 26 platziert. Das Dämpfungselement 27 ist dabei in Form eines O-Rings aus einem elastischen Material, wie z.B. verschiedenen Kautschuk-Arten, Perfluorkautschuk (FFKM oder FFPM), Polyethylen (PE) oder Polytetrafluorethylen (PTFE), gefertigt.

Wenn die Bohrkrone 2 mit der Abtriebswelle 6 verbunden werden soll, um das in dem Elektromotor 4 erzeugte Drehmoment von der Abtriebswelle 6 auf die Bohrkrone 2 zu übertragen, wird das Verbindungsende 13 der Abtriebswelle 6 in das Anschlussende 9 der Bohrkrone 2 gesteckt (vgl. Fig. 8 und 9). Durch das Ineinanderstecken greift die Außenverzahnung 15 der Abtriebswelle 6 in die Innenverzahnung 11 der Bohrkrone 2, wodurch eine drehfeste Verbindung entsteht. Das Innengewinde der Überwurfmutter 22 wird über das Außengewinde 12 des Anschlussendes 9 der Bohrkrone 2 geschraubt, um zu verhindern, dass die Bohrkrone 2 und die Abtriebswelle 6 axial wieder getrennt werden können (vgl. Fig. 8 und 9). Wenn die Überwurfmutter 22 auf das Anschlussende 9 der Bohrkrone 2 geschraubt wird, wird die Innenfläche 24 der Überwurfmutter 22 gegen das Dämpfungselement 27 gedrückt.

Damit erfolgt der Kraftfluss beim Verspannen der Überwurfmutter 22 mit dem Anschlussende 9 der Bohrkrone 2 in axialer Richtung (gegen die Pfeilrichtung H) über einen harten Anschlag zwischen dem Sicherungsring 25 der Überwurfmutter 22 und dem Anschlagscheibe 26 der Abtriebswelle 6 auf einen möglichst kleinem Durchmesser bei ausreichender Verschleißfestigkeit. Das Dämpfungselement 27 sorgt für eine definierte Vorspannung in diesem Spannsystem (d.h. in dem System bestehend aus Überwurfmutter 22 und Anschlussende 9) und sichert dabei gegen ein unerwünschtes Lösen der Verschraubung der Überwurfmutter 22 von dem Anschlussende 9 der Bohrkrone 2.

## Patentansprüche

1. Vorrichtung (20) zur Aufnahme und Sicherung eines Werkzeugs (2), insbesondere einer Bohrkrone, an einer Werkzeugmaschine (1), beispielsweise eine Kernbohrmaschine, enthaltend
- eine Abtriebswelle (6) zur Übertragung eines in der Werkzeugmaschine (1) erzeugten Drehmoments auf das Werkzeug (2); und
- eine um die Abtriebswelle (6) positionierte Überwurfmutter (22) zur lösbaren Verbindung der Abtriebswelle (6) mit einem Anschlussende (9) des Werkzeugs (2)
**dadurch gekennzeichnet, dass** die Abtriebswelle (6) einen Sicherungsring (25) enthält und die Überwurfmutter (22) eine Anschlagscheibe (26) sowie ein Dämpfungselement (27) enthält, wobei die Anschlagscheibe (26) zwischen dem Sicherungsring (25) und dem Dämpfungselement (27) positioniert ist.

2. Vorrichtung (20) nach Anspruch 1,
**dadurch gekennzeichnet, dass** in einem verbundenen Zustand der Überwurfmutter (22) mit dem Anschlussende (9) des Werkzeugs (2) eine Innenfläche (24) der Überwurfmutter 22 gegen das Dämpfungselement (27) drückt, wodurch die Anschlagscheibe (26) kraftschlüssig gegen den Sicherungsring (25) drückt.

3. Vorrichtung (20) nach Anspruch 1 oder 2,
**dadurch gekennzeichnet, dass** Überwurfmutter (22) ein Innengewinde (23) enthält und das Anschlussende (9) des Werkzeugs (2) ein zu dem Innengewinde (23) der Überwurfmutter (22) korrespondierendes Außengewinde (12) enthält, welches zur lösbaren Verbindung der Abtriebswelle (6) mit dem Anschlussende (9) des Werkzeugs (2) dient.

4. Vorrichtung (20) nach wenigstens einem der Ansprüche 1 bis 3,
**dadurch gekennzeichnet, dass** die Überwurfmutter (22) aus Kunststoff besteht.

5. Vorrichtung (20) nach wenigstens einem der Ansprüche 1 bis 4,
**dadurch gekennzeichnet, dass** der Sicherungsring (25) und die Anschlagscheibe (26) aus Metall besteht.
